**Europäisches Patentamt**

**European Patent Office**

**Office européen des brevets**

(19)

(11) Veröffentlichungsnummer: **0 186 792**
**B1**

(12)

# EUROPÄISCHE PATENTSCHRIFT

(45) Veröffentlichungstag der Patentschrift:
02.08.89

(21) Anmeldenummer: 85115194.4

(22) Anmeldetag: 29.11.85

(51) Int. Cl.⁴: **H 04 L 11/16**, H 04 B 1/74

(54) Schnittstellenbaustein.

(30) Priorität: 13.12.84 DE 3445521

(43) Veröffentlichungstag der Anmeldung:
09.07.86 Patentblatt 86/28

(45) Bekanntmachung des Hinweises auf die Patenterteilung:
02.08.89 Patentblatt 89/31

(84) Benannte Vertragsstaaten:
AT BE DE FR GB IT SE

(56) Entgegenhaltungen:
DE-A-3 012 438
US-A-3 845 472

(73) Patentinhaber: **Siemens Aktiengesellschaft Berlin und München, Wittelsbacherplatz 2, D-8000 München 2 (DE)**

(72) Erfinder: **Flach, Werner, Dipl.- Ing., Pfistermeisterstrasse 47, D-8450 Amberg (DE)**

## Beschreibung

Die Erfindung bezieht sich auf einen Schnittstellenbaustein zur symmetrischen Übertragung von Datenströmen in einem Datennetzwerk mit separaten Stromversorgungen für die einzelnen Busstationen, wobei Mittel zur Überbrückung der Busstationen und zur Herstellung der Betriebsbereitschaft bei ausgefallener Stromversorgung im Schnittstellenbaustein vorhanden sind.

Schnittstellenbausteine der obengenannten Art sind beispielsweise aus der Patentschrift US-A-3 845 472 bekannt. Bei dem hier beschriebenen Schnittstellenbaustein dienen die Stromversorgungen unterschiedlichen Aufgaben, unter anderem zum Betrieb einer Ringkommunikation. Als Mittel zur Überbrückung der Busstation und zum Abschalten derselben sind hier Relais vorgesehen. Weiterhin ist ein Schalter in jeder Busstation vorhanden, mit dem sich die Betriebsbereitschaft bei ausgefallener Stromversorgung herstellen läßt.

Der Erfindung liegt die Aufgabe zugrunde, den oben beschriebenen Schnittstellenbaustein dahingehend zu verbessern, daß ein automatischer Busabschluß der Teilnehmer an den Busenden erfolgt. Dies wird dadurch erreicht, daß die Mittel zur Herstellung der Betriebsbereitschaft aus einer ODER-Schaltung bestehen, die von einem vom Differenzempfänger des Schnittstellenbausteiens abgeleiteten, über ein RC-Glied verzögerten Signal und von einem durch einen parallel zum Eingang des Differenzverstärkers geschalteten Optokoppler erzeugten Signal beaufschlagt ist. Die hochstabilen Verzögerungszeiten des RC-Gliedes, die durch einen nachgeschalteten Operationsverstärker noch klarer hervorgehoben werden können, lassen die starken unsymmetrischen Verzögerungszeiten des Optokopplers in preiswerter Ausführung nicht ins Gewicht fallen. Um eine gewisse Hysterese für den Optokoppler zu erreichen ist es vorteilhaft, wenn dem Optokoppler ein Schmitt-Trigger nachgeschaltet ist.

Anhand der Zeichnung wird ein Ausführungsbeispiel gemäß der Erfindung beschrieben.

Es zeigen:

Fig. 1    die schematische Darstellung des Datennetzwerkes mit zwei Busendstationen und einer Mittenstation mit den entsprechenden Schnittstellenbausteinen,

Fig. 2    den prinzipiellen Aufbau des Schnittstellenbausteins mit der Busankopplung und automatischem Busabschluß bzw. Überbrückung der Busstation und

Fig. 3    ein Zeitdiagramm der Einzelsignale zur Herstellung der Betriebsbereitschaft bei ausgefallener Stromversorgung.

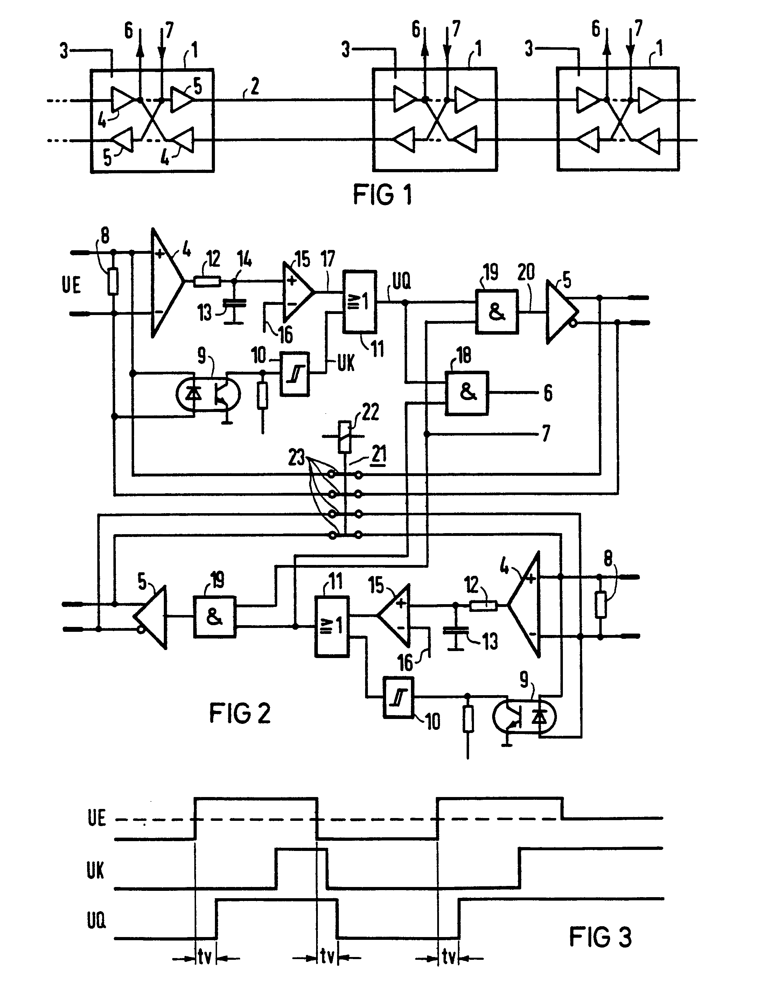

Das in der Fig. 1 dargestellte Datennetzwerk besteht aus den Schnittstellenbausteinen 1, die über eine fingerartige Busleitung 2 miteinander verbunden sind und die nicht näher dargestellten Busstationen mit den entsprechenden Signalen versorgen. Den einzelnen Schnittstellenbausteinen sind Stromversorgungen 3 zugeordnet. Die bestehen aus den Differenzempfängern 4 und den Sendern 5. Die nach außen gehenden Empfängs- und Sendeleitungen tragen die Bezeugszeichen 6 und 7.

Wie die Fig. 2 zeigt, ist dem Eingang der Differenzempfänger 4 ein Widerstand 8 parallelgeschaltet, der aufgrund des Linienstromes einen Spannungsabfall erzeugt, der durch den Eingang des Differenzempfängers 4 abgegriffen wird. Parallel hierzu liegt ein Optokoppler 9, der über den Transistorbassistrom und einen Schmitt-Trigger 10 in der Negativphase ein Signal an das ODER-Gatter 11 gibt. Am Ausgang des Differenzverstärkers 4 ist ein aus dem Wiederstand 12 und dem Kondensator 13 bestehendes RC-Glied gegen Masse geschaltet. Am Verbindungspunkt 14 zwischen Widerstand 12 und Kondensator 13 ist der Eingang eines als Kooperator arbeitenden Operationsverstärkers 15 angeschlossen, dessen anderer Eingang 16 mit einer Referenzspannung gespeist ist. Der Ausgang 17 des Operationsverstärkers 15 ist an den zweiten Eingang des ODER-Gatters 11 angeschlossen. Der Ausgang des ODER-Gatters 11 ist einerseits an die UND-Stufe 18, deren Ausgang an der Empfangs-Leitung 6 liegt, und andererseits an der UND-Stufe 19, deren Ausgang 20 am Sender 5 liegt, angeschlossen. Da die Schnittstellenbausteine symmetrisch aufgebaut sind, sind an den weiteren Eingängen der UND-Stufe 18 und 19 einerseits der Ausgang des anderen ODER-Gatters 11 und andererseits der Eingang des anderen UND-Gatters 19 angeschlossen. Die beiden anderen Eingänge der UND-Stufen 19 sind mit der Sendeleitung 7 in Verbindung gebracht. Zur Oberbrückung der Busstation bei Ausfall der Stromversorgung einer mittleren Busstation dient ein elektromagnetisches Relais 21, dessen Spule 22 an die Stromversorgung 3 des Schnittstellenbausteines angeschlossen ist. Die Öffnerkontakte 23 des Relais 21 überbrücken jeweils Empfängereingang und Senderausgang, sofern die Spule 22 spannungslos ist, d.h. die Busstation ist unwirksam. Um auch die Schnittstellenbausteine am Ende der Busleitungen bei Spannungsausfall automatisch auf Betriebsbereitschaft für die übrigen Teilnehmer zu schalten, ist die aus dem RC-Glied 12, 13 dem Optokoppler 9 und dem ODER-Gatter 11 bestehende Schaltung vorgesehen. Die Funktion dieser Schaltung ist der Fig. 3 zu entnehmen. Im oberen Diagramm ist die Eingangsspannung am Differenzempfänger 4 dargestellt, die zwischen einem Positiven und einem negativen Maximalwert schwanken kann. Im zweiten Diagramm ist die Spannung UK wiedergegeben, die die Spannung nach dem Schmitt-Trigger 10 darstellt, die die busmäßig sehr streuenden Schaltzeiten des Optokopplers 9 wiedergibt. Das Spannungsdiagramm UQ ist gegenüber dem Spannungsdiagramm UE um die Zeit tv aufgrund der Wirkung des RC-Gliedes 12, 13 verschoben. Diese Verschiebung bleibt konstant, d.h. die streuenden Schaltzeiten des Optokopplers 9 werden im Normalbetrieb durch das RC-Glied nicht wirksam, d.h. der Datenstrom wird bei Hintereinanderschaltung mehrerer Busteilnehmer zwar verzögert, jedoch nicht verzerrt. Diese Verzögerung für eine Übertragung mit fester Baudrate bis zu 100 kHz möglich.

Fällt nun der Differenzstrom am Eingang des Differenzempfängers 4 aus, gibt der Optokoppler 9 nach einer Verzögerungszeit von ca. 30 Mikrosekunden den Ruhepegel 1 über die UND-Stufe 18 auf den Bus und hält ihn somit betriebsbereit, was aus dem Ende des Diagrammes Fig. 3 zu ersehen ist.

Durch die Erfindung ist es somit möglich, mit relativ einfachen und preiswerten handelsüblichen Mitteln, insbesondere die Endstationen eines Datennetzwerkes bei abgekoppelter Busstation bzw. ausgefallener Stromversorgung entsprechend abzuschließen und somit das Datennetzwerk insgesamt betriebsbereit zu halten. Die hierzu erforderlichen Spannungen, insbesondere die Referenzspannung 16, da sie auf relativ niedrigem Niveau liegen, können von der Nachbarstation entnommen werden. Ohne die zuletzt beschriebene Schaltung würde die Sendeleitung bei einer Station am Busende nicht mehr mit einem Differenzstrom gespeist; der daran angeschlossene Empfänger würde lediglich undefinierte bzw. Störsignale empfangen und den Datenverkehr der übrigen Teilnehmer zum Erliegen bringen.

**Patentansprüche**

1. Schnittstellenbaustein (1) zur symmetrischen Übertragung von Datenstromen in einem Datennetzwerk mit separaten Stromversorgungen (3) für die einzelnen Busstationen, wobei Mittel zur Überbrückung der Busstationen und zur Herstellung der Betriebsbereitschaft bei ausgefallener Stromversorgung im Schnittstellenbaustein vorhanden sind, dadurch gekennzeichnet, daß die Mittel zur Herstellung der Betriebsbereitschaft aus einer ODER-Schaltung (11) bestehen, die von einem vom Differenzempfänger (4) des Schnittstellenbausteins (1) abgeleiteten, über ein RC-Glied (12, 13) verzögerten Signal und von einem durch einen parallel zum Eingang des Differenzverstärkers geschalteten Optokoppler (9) erzeugten Signal beaufschlagt ist.

2. Baustein nach Anspruch 1 oder 2, dadurch gekennzeichnet, daß dem RC-Glied ein Operationsverstärker (15) nachgeschaltet ist.

3. Baustein nach Anspruch 1, 2 oder 3, dadurch gekennzeichnet, daß dem Optokoppler (9) ein Schmitt-Trigger (10) nachgeschaltet ist.

**Claims**

1. Interface module (1) for the symmetrical transmission of data streams in a data network with separate current supplies (3) for the individual bus stations, in the case of which there are means for bypassing the bus stations and for establishing the readiness for operation in the case of failed current supply in the interface module, characterised in that the means for producing the readiness for operation consist of an OR circuit (11), upon which there act a signal which is derived from the difference receiver (4) of the interface module (1) and is delayed by means of an RC element (12, 13) and a signal produced by means of an optocoupler (9) connected in parallel to the input of the difference amplifier.

2. Module according to claim 1 or 2, characterised in that an operational amplifier (15) is subsequently connected to the RC element.

3. Module according to claim 1, 2 or 3, characterised in that a Schmitt trigger (10) is subsequently connected to the optocoupler (9).

**Revendications**

1. Module d'interface (1) pour la transmission symétrique de flux de données dans un réseau informatique comportant des alimentations electriques (3) séparées pour les différentes stations de bus, avec des moyens pour shunter les stations de bus et pour établir l'aptitude au fonctionnement en cas de défaillance de l'alimentation dans le module d'interface, caractérisé en ce que les moyens pour établir l'aptitude au fonctionnement sont formes par un circuit ou (11) auquel est appliqué un signal dérivé dun récepteur diffréntiel (4) du module d'interface (1), retardé par un circuit RC (12, 13) et généré par un coupleur optique (9) monté en parallèle avec l'entrée de l'amplificateur différentiel.

2. Module selon la revendication 1, caractérisé en ce que le circuit RC est suivi d'un amplificateur opérationnel (15).

3. Module selon la revendication 1 ou 2, caractérisé en ce que le coupleur optique (9) est suivi d'un déclencheur de Schmitt (10).

FIG 1

FIG 2

FIG 3